(19) Europäisches Patentamt

European Patent Office

Office européen des brevets

(11) EP 1 705 843 A1

(12) **EUROPEAN PATENT APPLICATION**

(43) Date of publication:
27.09.2006 Bulletin 2006/39

(51) Int Cl.:
*H04L 12/56* (2006.01)      *H04B 7/06* (2006.01)
*H04B 7/26* (2006.01)      *H04Q 7/30* (2006.01)
*H04L 12/28* (2006.01)

(21) Application number: 05257316.9

(22) Date of filing: 29.11.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 24.03.2005 US 664594 P
02.08.2005 US 194546

(71) Applicant: INDUSTRIAL TECHNOLOGY
RESEARCH INSTITUTE
Hsinchu, Taiwan 310 (CN)

(72) Inventors:
• Whang, Hui-Ming,
Ind. Technology Res. Inst.
Sec. 4 Chutung
Hsinchu, Taiwan 310 (CN)

• Kuo, Chun-Chun,
Ind. Technology Res. Inst.
Sec. 4 Chutung
Hsinchu, Taiwan 310 (CN)
• Chuang, Wei Ping,
Ind. Technology Res. Inst.
Sec. 4 Chutung
Hsinchu, Taiwan 310 (CN)
• Ting, Pang-An,
Ind. Technology Res. Inst.
Sec. 4 Chutung
Hsinchu, Taiwan 310 (CN)

(74) Representative: Beresford, Keith Denis Lewis
Beresford & Co.,
16 High Holborn
London WC1V 6BX (GB)

(54) **Method and apparatus for increasing capacity of a MIMO (multiple-input-multiple-output) wireless system by using relaying**

(57)     A wireless system includes a base station, user equipment (UE), and at least one wireless device capable of communicating with the base station. The wireless device and the UE belong to an area network. The UE is capable of communicating with a base station directly and communicating with the base station through the wireless device. The wireless device communicates with the base station wirelessly and communicates with the UE either wirelessly or through cable.

Fig. 2

**Description**

Benefit of Priority

The present application is related to, and claims the benefit of priority of, U.S. Provisional Application No. 60/664,594, filed on March 24, 2005, entitled "Method and Apparatus of Multiple Transmit Multiple Receive Wireless User Equipment Systems Using Cable-Less Remote Antenna", the entire contents of which are incorporated herein by reference.

Technical Field

This invention relates generally to wireless user equipment systems and, more particularly, to method and apparatus of a multiple-input-multiple-output wireless user equipment system and components.

Background

Wireless communications systems are in wide use today. In a wireless communications system, a transmitter encodes information, modulates a carrier frequency using the encoded information, and transmits signals at the carrier frequency wirelessly through an antenna, and a receiver captures the signals at the carrier frequency also through an antenna, demodulates the signals, and decodes the signals to retrieve the information. A wireless communications system generally includes one or more base stations and a number of mobile stations (such as mobile phones) communicating with the base stations. Each of the base stations and the mobile stations comprises a transceiver including a transmitter and a receiver and an antenna operable at a certain frequency.
Shannon's theorem provides that the capacity C of a communications system including a transmitter, a receiver, and a channel between the transmitter and the receiver (the air acts as the channel in a wireless system) is determined by the bandwidth B of the channel, and the signal-to-noise ratio (SNR) of signals received at the receiver, as follows:

$$C = B \log_2(1 + SNR).\qquad(1)$$

Formula (1) indicates two ways to improve the capacity of a system, i.e., providing a broader bandwidth for the channel and increasing the SNR. However, a broader bandwidth not only results in more interference and more noise, but is often impractical, because the available frequency spectrum is limited and highly regulated. Increasing the SNR, on the other hand, is inefficient, because the capacity of the system only increases logarithmically with the SNR.
If, however, there exist multiple channels operating at the same frequency between the transmitter and the receiver, the capacity of a communications system may be increased significantly without having to increase the bandwidth of each channel. Such a system is called a multiple-input-multiple-output (MIMO) system. A wireless MIMO system may include a transmitter with multiple antennas and a receiver also with multiple antennas, providing multiple wireless channels each between an antenna on the transmitter side and a corresponding antenna on the receiver side. It has been proven that, when the antennas are spaced sufficiently apart from one another, e.g., by tens of the wavelength of the carrier frequency, correlation between the transmissions of the antennas can be significantly reduced and each channel may be able to realize its maximum capacity. Thus, a wireless system having M antennas for both the transmitter and the receiver has a maximum capacity:

$$C = MB \log_2(1 + SNR).\qquad(2)$$

Employing the MIMO scheme in a wireless system requires that both the base stations and mobile stations each have multiple antennas. This requirement is easily satisfied at the base stations, which can have as many antennas as required. The mobile stations, however, are generally small and may not be able to contain multiple antennas. For example, in a 2.4 GHz system, antennas need to be separated by more than 125 cm, which is impractical for a mobile telephone, which typically has a size of around 10 cm.
A paper entitled "Cooperative Diversity in Wireless Networks: Efficient Protocols and Outage Behavior," by Tse et al., IEEE Transactions on Information Theory, vol. 50, No. 12, December 2004, proposes an MIMO system taking advantage of the antennas of multiple mobile phones. When one of the mobile phones, referred to as the destination mobile phone, communicates with the base station, signals are transmitted not only directly between the destination mobile phone and the base station, but also indirectly through the other mobile phones. A special protocol employed by the system makes sure that signals received by the other mobile phones are relayed to the destination mobile phone or the base station. Thus, each of the other mobile phones acts as a "virtual" antenna for the destination mobile phone, and multiple channels can be obtained between the destination mobile phone and the base station.

Problems with this proposal include 1) mobile phones have limited power supply and users are reluctant to contribute to such a sharing scheme; 2) the proposed MIMO system needs to employ complex protocols to coordinate the mobile phones due to their high mobility, as some mobile phones may travel out of reach while additional mobile phones may enter the MIMO system during the communication between the destination mobile phone and the base station; and 3) when a relaying mobile phone has a weak signal, the relaying mobile phone itself needs a relay, which causes increased delay in the destination mobile phone receiving the signals.

## SUMMARY OF THE INVENTION

Consistent with embodiments of the present invention, there is provided a wireless system that includes a base station, user equipment (UE), and at least one wireless device capable of communicating with the base station. The wireless device and the UE belong to an area network. The UE is capable of communicating with a base station directly and communicating with the base station through the wireless device.

In one aspect, the wireless device communicates with the base station wirelessly and communicates with the UE either wirelessly or through cable.

Consistent with embodiments of the present invention, there is also provided a wireless personal area network (WPAN) that includes a plurality of wireless devices, each wireless devices being capable of communicating with a base station both directly and through others of the wireless devices.

Consistent with embodiments of the present invention, there is further provided a wireless system that includes a plurality of base stations, a plurality of wireless personal area networks (WPANs) each comprising a plurality of wireless devices capable of communicating with one of the base stations, and a mobile device communicating with the base stations. When the mobile device is in an area of one of the WPANs, the mobile device acts as a WPAN coordinator for the one of the WPANs, and the mobile device communicates with the base stations both directly and through the wireless devices of the one of the WPANs.

Consistent with embodiments of the present invention, there is also provided user equipment (UE) located in a wireless personal area network (WPAN), the WPAN including a plurality of wireless devices capable of relaying communication between the UE and a base station. The UE includes means for directly communicating with the base station and means for communicating through the wireless devices with the base station.

Consistent with embodiments of the present invention, there is also provided a wireless device within a wireless personal area network (WPAN), the WPAN including a WPAN coordinator, wherein the wireless device is capable of relaying communication between one other wireless device located in the WPAN and a base station. The wireless device includes a first means for communicating with the base station through a first frequency band and a second means for communicating with the other wireless device through a second frequency band.

Additional features and advantages of the invention will be set forth in part in the description which follows, and in part will be obvious from the description, or may be learned by practice of the invention. The features and advantages of the invention will be realized and attained by means of the elements and combinations particularly pointed out in the appended claims.

It is to be understood that both the foregoing general description and the following detailed description are exemplary and explanatory and are intended to provide further explanation of the invention as claimed.

## BRIEF DESCRIPTION OF THE DRAWINGS

The accompanying drawings, which are incorporated in and constitute a part of this specification, illustrate embodiments of the invention and, together with the description, serve to explain the objects, advantages, and principles of the invention.

In the drawings,

Fig. 1 illustrates a conventional wireless communications system with a plurality of remote antennas;

Fig. 2 illustrates a wireless communications system including user equipment and a plurality of wireless devices consistent with a first embodiment of the present invention;

Fig. 3 shows the structure of one wireless device consistent with the first embodiment of the present invention;

Fig. 4 shows the structure of the user equipment of Fig. 2; and

Fig. 5 shows a wireless communications system consistent with a second embodiment of the present invention.

## DESCRIPTION OF THE EMBODIMENTS

Reference will now be made in detail to embodiments of the invention, examples of which are illustrated in the accompanying drawings. Wherever possible, the same reference numbers will be used throughout the drawings to refer to the same or like parts.

Consistent with embodiments of the present invention, there are provided wireless communications systems using remote antennas (RA) to provide benefits of a multiple-input-multiple-output (MIMO) system.

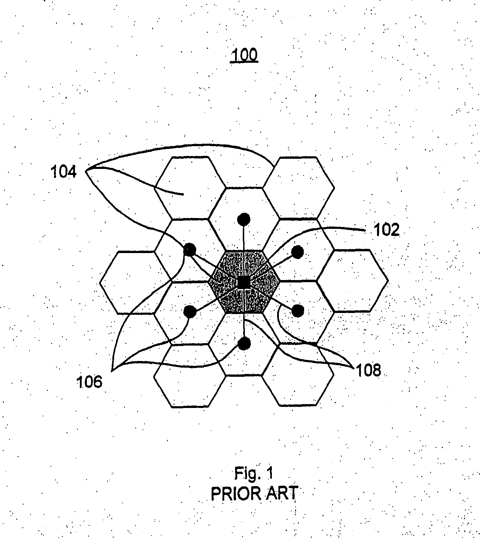

Conventional RAs have been used to improve area coverage and quality of signal of a base station in a wireless communications system. Fig. 1 illustrates a conventional wireless communications system 100 including a base station 102 located in one of a plurality of wireless cells 104. Each wireless cell 104 has a certain area equivalent to an area reachable by wireless transmitters used in system 100. Therefore, only the shaded cell 104 in which base station 102 is located can be reached by base station 102, and a mobile device in other cells 104 is unable to receive signals from base station 102 with a good quality. A plurality of RAs 106 may be installed in each of the other cells 104 to expand the coverage area of base station 102. Fig. 1 shows 6 RAs 106 installed in the 6 neighboring cells 104 of base station 102. RAs 106 are connected to base station 102 through connection links 108, which may be electric wires, optical fibers, or high-speed internet cables. RAs 106 receive signals from base station 102 and re-transmit the signals wirelessly so that mobile devices in the corresponding cells 104 may receive high-quality signals.

Consistent with a first embodiment of the present invention, there is provided a wireless system that includes a base station having multiple antennas and a user equipment (UE) communicating with the base station both directly and through wireless equipment in the neighborhood of the UE acting as RAs for the UE. The UE and the wireless equipment may belong to an area network, such as a local area network (LAN). a metropolitan area network (MAN), etc. A LAN is a network including, within a small area, devices capable of communicating with one another, either directly or through a centralized controller such as a router. A MAN is a network of devices that spans over a larger area than a LAN, such as a city, with dedicated or high-performance hardware. Because the wireless equipment is in the neighborhood of the UE, the UE and the wireless equipment may be considered to also form a personal area network (PAN). A PAN is a network including, within a small area and generally within a personal work area, devices capable of directly communicating with one another rather than through access points.

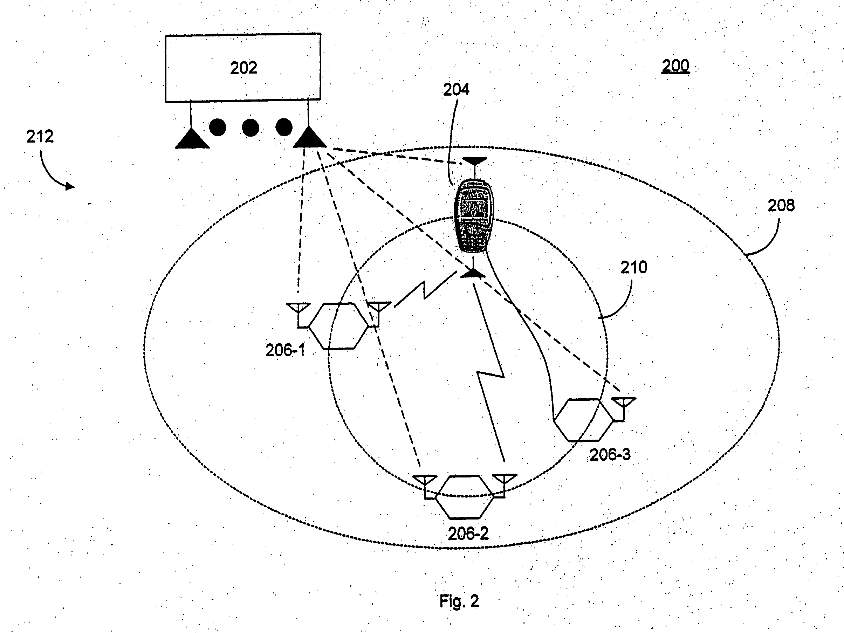

Fig. 2 illustrates an MIMO wireless system 200 consistent with the first embodiment of the present invention. Wireless system 200 may comprise a cellular network, a wireless local area network (WLAN), or a wireless metropolitan area network (WMAN), etc., and includes a base station 202 having a plurality of antennas (not numbered) and a UE 204 communicating with base station 202. Base station 202 may comprise a cellular base station, a WLAN access point, or a WMAN base station. UE 204 may comprise a mobile telephone, notebook, personal digital assistant (PDA), smart phone, etc.

Consistent with the first embodiment of the present invention, system 200 also includes a plurality of wireless devices 206 in the neighborhood of UE 204 acting as RAs for UE 204. Fig. 2 shows three wireless devices 206, i.e., 206-1, 206-2, 206-3. Wireless devices 206 and UE 204 form a wireless PAN (WPAN) 208, which may be a part of a WLAN or a WMAN. Wireless devices 206 and UE 204 are generally spaced sufficiently apart so that almost no correlation exists between any two of them. When UE 204 communicates with base station 202, each wireless device 206 receives signals from base station 202 and relays the signals to UE 204, and also receives signals from UE 204 and relays the signals to base station 202. At the same time, UE 204 also directly communicates with base station 202. Therefore, there are multiple channels for UE 204 to communicate on with base station 202, including a direct channel between base station 202 and UE 204 and multiple indirect channels through wireless devices 206. Wireless devices 206 may then be referred to as RA devices of UE 204. UE 204 determines how signals are relayed through wireless devices 206 by transmitting control signals to wireless devices 206.

In one aspect, wireless devices 206 may communicate with UE 204 wirelessly, and may be referred to as cable-less RAs. In Fig. 2, wireless devices 206-1 and 206-2 are cable-less RAs. In another aspect, wireless devices 206 are connected to UE 204 through cables, and may be referred to as cabled RAs. In Fig. 2, wireless device 206-3 is cabled RA. A wireless system consistent with the first embodiment of the present invention may include a plurality of cable-less RAs, or a plurality of cabled RAs, or a mixture of both cable-less and cabled RAs.

A network 210 comprising UE 204 and wireless devices 206 is referred to as an RA-link network, and a network 212 comprising base station 202 and RA-link network 210 is referred to as an RAT (remote activity technology) network. Different frequency bands may be employed in RA-link network 210 and RAT network 212, and may be respectively referred as RA-link bands and RAT bands. There may be more than one RA-link band and/or more than one RAT band. For example, cable-less RAs 206 may communicate with UE 204 in a different RA-link band than cabled RAs 206.

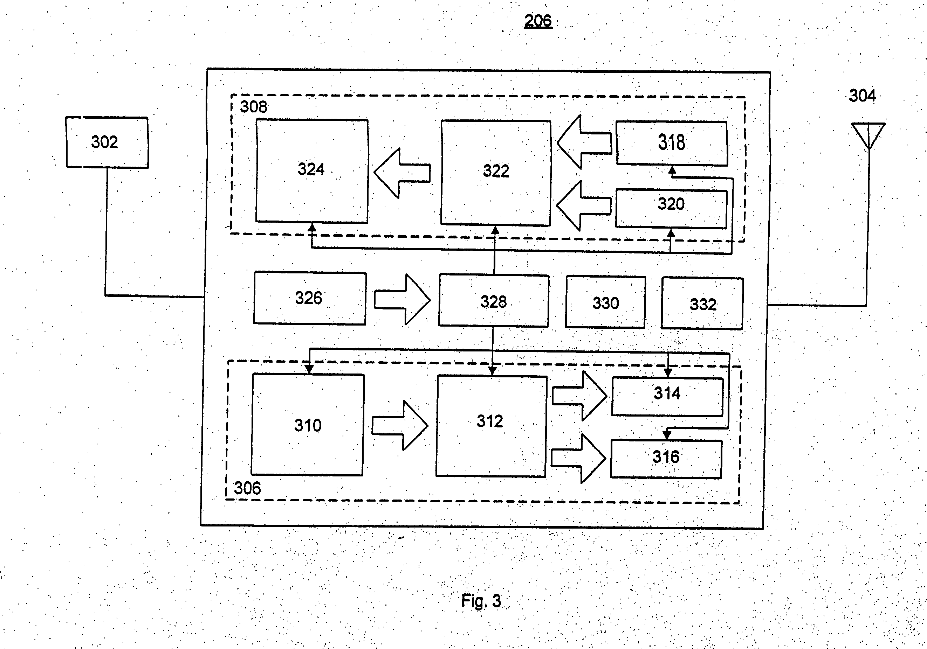

To relay communications between base station 202 and UE 204, each wireless device 206 needs to be able to communicate with both base station 202 and UE 204, i.e., within RA-link network 210 and within RAT network 212. Fig. 3 illustrates an example of a structure of one wireless device 206.

As Fig. 3 shows, wireless device 206 has a means 302 for communicating with UE 204 and an RAT-link antenna 304 operable in an RAT band for communicating with base station 202. Means 302 may comprise an RA-link antenna for receiving and transmitting signals wirelessly if wireless device 206 is cable-less, or may comprise a means for connecting a cable to UE 204 if wireless device 206 is cabled. Alternatively, a single antenna operable in both an RA-link band and an RAT band may be used in wireless device 206 for communications with both UE 204 and base station 202. Further alternatively, wireless device 206 may use multiple antennas each for communicating with a certain type of device. For example, wireless device 206 may include a first antenna for communicating with base station 202 when base station 202 is cellular based, a second antenna for communicating with base station 202 when base station 202 is WLAN based, a third antenna for communicating with base station 202 when base station 202 is WMAN based, and, if wireless device 206 is cable-less, a fourth antenna for communicating with UE 204.

Wireless device 206 includes a first converter 306 for converting signals from an RA-link band to an RAT band and a second converter 308 for converting signals from the RAT band to the RA-link band. First converter 306 includes an RA-link network front end receiver 310 for receiving signals in the RA-link band, a frequency band shifter 312 for converting the signals form the RA-link band to the RAT band, a cellular based RAT front end transmitter 314 for transmitting the signals in the RAT band when base station 202 comprises a cellular base station, and an area network based RAT front end transmitter 316 for transmitting the signals in the RAT band. Area network based RAT front end transmitter 316 may be WLAN based when base station 202 comprises a WLAN base station or may be WMAN based when base station 202 comprises a WMAN base station. Frequency band shifter 312 may include an RAT band selection filter, an RA-link band selection filter, and a frequency synthesizer and translator. First converter 306 may further include a controller (not shown) for controlling amplitude and phase of the signals in the RAT and RA-link bands and a conversion gain balancer (not shown) for balancing the gain of converting the signals from the RA-link band to the RAT band.

Second converter 308 includes a cellular based RAT front end receiver 318 for receiving signals from base station 202 through antenna 304 when base station 202 comprises a cellular base station, an area network based RAT front end receiver 320 for receiving signals from base station 202 when base station 202 comprises a WLAN base station, a frequency band shifter 322 for transferring the signals from an RAT band to an RA-link band, and an RA-link network front end transmitter 324 for transmitting the signals in the RA-link band. Area network based RAT front end receiver 320 may be WLAN based when base station 202 comprises a WLAN base station or may be WMAN based when base station 202 comprises a WMAN base station. Frequency band shifter 322 may include an RAT band selection filter, an RA-link band selection filter, and a frequency synthesizer and translator. Second converter 308 may further include a controller (not shown) for controlling amplitude and phase of the signals in the RAT and RA-link bands and a conversion gain balancer (not shown) for balancing the gain of converting the signals from the RAT band to the RA-link band.

Fig. 3 shows that wireless device 206 also includes a control signal receiver 326 for receiving control signals from UE 204. Wireless device 206 may also include other circuit modules such as an RA device controller 328 for controlling the operations of first converter 306 and second converter 308, a device error indicator 330 for monitoring and indicating malfunctions of wireless device 206, and a battery or power module 332, etc.

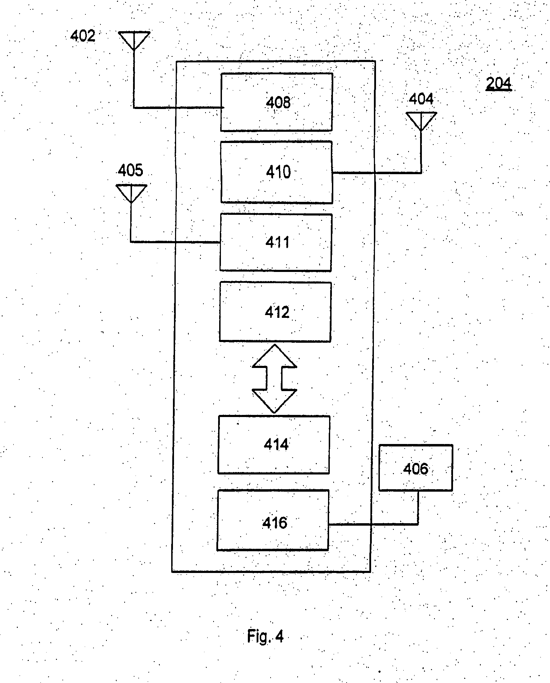

Similarly, UE 204 also communicates with both base station 202 and wireless devices 206. Fig. 4 illustrates an example of a structure of UE 204. In Fig. 4, UE 204 includes a first RAT antenna 402 for communicating with base station 202 when base station 202 is cellular based, a second RAT antenna 404 for communicating with base station 202 when base station 202 is WLAN based, and a third RAT antenna 405 for communicating with base station 202 when base station 202 is WMAN based. UE 204 also includes a means 406 for communicating with wireless devices 206. Means 406 may comprise an RA-link antenna for receiving and transmitting signals wirelessly if system 200 includes cable-less RAs 206, or a means for connecting a cable to cabled RAs 206, or both. Alternatively, UE 204 may use fewer antennas, if the antennas are operable to serve multiple purposes.

In addition, UE 204 includes a cellular-based RAT transceiver 408 for receiving and transmitting signals through first RAT antenna 402, a WLAN-based RAT transceiver 410 for receiving and transmitting signals through second RAT antenna 404, a WMAN-based RAT transceiver 411 for receiving and transmitting signals through third RAT antenna 405, an RAT baseband processor 412 for processing signals received or to be transmitted through first RAT antenna 402, second RAT antenna 404, or third RAT antenna 405, an MIMO coprocessor 414 for processing signals received or to be transmitted through means 406, and an RA-link network transceiver 416 for receiving and transmitting signals through means 406. In particular, MIMO coprocessor 414 enables UE 204 to coordinate wireless devices 206 to act as RAs for UE 204. Cellular-based RAT transceiver 408, WLAN-based RAT transceiver 410, WMAN-based transceiver 411, RAT baseband processor 412, and MIMO coprocessor 414 each may be provided as part of a chip on board (COB) construction. RA-link network transceiver 416 may be provided as a COB or as a plug-in module.

As described above, system 200 is an MIMO system, wherein UE 204 communicates with base station 202 through multiple channels, including a direct channel between UE 204 and base station 202 and multiple relay channels through wireless devices 206. Because UE 204 and wireless devices 206 form WPAN 208, problems associated with the above described proposed MIMO scheme may be obviated. For example, the same user may be using wireless devices 206 and UE 204 and, therefore, there is no problem of reluctance of other users to share wireless devices. In addition, because wireless devices 206 are known, MIMO system 200 consistent with the first embodiment of the present invention requires much simpler protocols for communications between base station 202 and WPAN 208.

In the above description of the first embodiment, it was assumed that UE 204 communicates with base station 202 and therefore enjoys the benefits of an MIMO system. It is noted, however, that MIMO system 200 as shown in Figs. 2-4 equally benefits any of wireless devices 206 in their communications with base station 202, since multiple channels also exist when any one wireless device 206 communicates with base station 202, including a direct channel and multiple relaying channels through other wireless devices 206 and UE 204. Particularly, on one hand, the one wireless device 206 receives signals from and transmits signals to base station 202 directly. On the other hand, each of UE 204 and other wireless devices 206 receives signals from base station 202 and relays the signals. to the one wireless device 206, and also receives signals from the one wireless device 206 and relays the signals to base station 202. In one aspect, UE 204 acts as a WPAN coordinator for coordinating the communications of wireless devices 206 and UE 204 with base station 202. In another aspect, one of wireless devices 206 acts as the WPAN coordinator and includes an MIMO coprocessor for coordinating communications between wireless devices 206 and base station 202. In other words, the benefits of an MIMO system are available to each wireless device 206 even in the absence of UE 204.

System 200 consistent with the first embodiment of the present invention also allows easy addition of wireless devices 206. For example, if an additional laptop computer is to use the network, it may simply do so by registering with the WPAN coordinator.

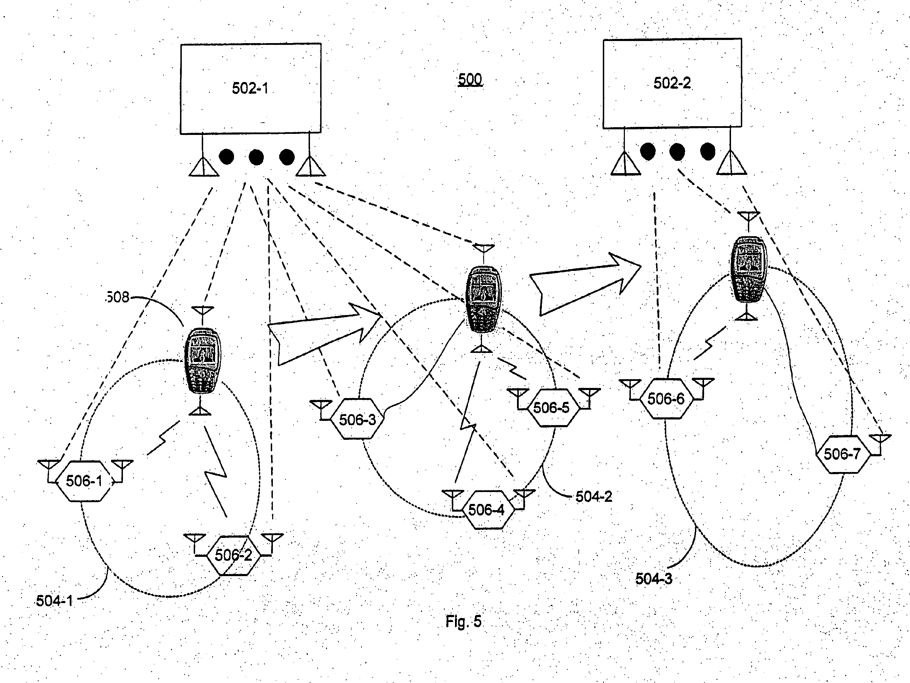

Consistent with a second embodiment of the present invention, there is provided a wireless communications system including one or more base stations, an area network including wireless devices distributed in one or more local areas, and a UE traveling around the base stations. The wireless devices in each local area may be considered to form a WPAN, and the wireless devices within one WPAN act as RAs for the UE when the UE is within the area of the one WPAN. Fig. 5 illustrates a wireless system 500 consistent with the second embodiment of the present invention.

As shown in Fig. 5, system 500 includes a plurality of base stations 502, e.g., 502-1, 502-2, etc., and a plurality of WPANs 504, e.g., 504-1, 504-2, 504-3, etc. A plurality of wireless devices 506, e.g., 506-1, 506-2, etc., are distributed in the WPANs 504. Base stations 502 may include cellular base stations, WLAN base stations, or WMAN base stations. In the example shown in Fig. 5, wireless devices 506-1 and 506-2 belong to WPAN 504-1, wireless devices 506-3 (shown to be cabled), 506-4, and 506-5 belong to WPAN 504-2, and wireless devices 506-6 and 506-7 (shown to be cabled) belong to WPAN 504-3. A UE 508 travels around and communicates with base stations 502. Each of wireless devices 506 has a structure similar to the structure of wireless device 206 shown in Fig. 3, and UE 508 has a structure similar to the structure of UE 204 shown in Fig. 4. When UE 508 is in the area of WPAN 504-1, wireless devices 506-1 and 506-2 act as cable-less RAs for UE 508 and form an RA-link network with UE 508. When UE 508 is in the area of WPAN 504-2, wireless device 506-3 acts as a cabled RA and wireless devices 506-4 and 506-5 act as cable-less RAs for UE 508 and form an RA-link network with UE 508. When UE 508 is in the area of WPAN 504-3, wireless device 506-6 acts as a cable-less RA and wireless device 506-7 acts as a cabled RA for.UE 508 and form an RA-link network with UE 508. When UE 508 enters the area of one WPAN 504, UE 508 acts as the WPAN coordinator for the one WPAN 504 to coordinate communications between wireless devices 506 in that WPAN 504 and base stations 502. Thus, UE 508 can communicate with base stations 502 while traveling around base stations 502 and enjoying benefits of an MIMO system.

It will be apparent to those skilled in the art that various modifications and variations can be made in the disclosed process without departing from the scope or spirit of the invention. Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

**Claims**

1. A wireless system, comprising:

   a base station;
   user equipment (UE); and
   at least one wireless device capable of communicating with the base station,
   wherein the wireless device and the UE belong to an area network, and wherein the UE is capable of communicating with a base station directly and communicating with the base station through the wireless device.

2. The system of claim 1, wherein the base station comprises a cellular base station, a wireless local area network (WLAN) access point, or a wireless metropolitan area network (WMAN) base station.

**3.** The system of claim 1, wherein the area network comprises a wireless local area network (WLAN) or a wireless metropolitan area network (WMAN), and the wireless device and the UE also form a wireless personal area network (WPAN) within the area network.

**4.** The system of claim 1, wherein the wireless device communicate with the base station through a first frequency band and communicate with the UE through a second frequency band, and wherein the wireless device comprises:

a first converter for converting signals from the first frequency band to the second frequency band, and
a second converter for converting signals from the second frequency band to the first frequency.band.

**5.** The system of claim 4, wherein the first and second converters each include a controller for controlling signal phase and signal amplitudes.

**6.** The system of claim 4, wherein the first and second converters each include a frequency band shifter and a balancer for balancing conversion gain.

**7.** The system of claim 1, wherein the wireless device includes a receiver for receiving control signals from the UE, a first transceiver for communicating with the base station, and a second transceiver for communicating with the UE.

**8.** The system of claim 1, wherein the UE comprises mobile equipment.

**9.** The system of claim 1, wherein the UE coordinates the wireless device.

**10.** The system of claim 1, wherein the UE includes a chip-on-board (COB) radio access technology (RAT) transceiver, a COB RAT baseband processor, and a COB multiple-input-multiple-output (MIMO) coprocessor.

**11.** The system of claim 10, wherein the UE further includes a COB remote antenna link subsystem.

**12.** The system of claim 10, wherein the UE further includes a plug-in module remote antenna-link subsystem.

**13.** The system of claim 1, wherein the at least one wireless device communicates with the UE wirelessly.

**14.** The system of claim 1, wherein the at least one wireless device communicates with the UE through a cable.

**15.** The system of claim 1, wherein the at least one wireless device comprises at least a first wireless device capable of communicating with the UE wirelessly and a second wireless device capable of communicating with the UE through a cable.

**16.** A wireless personal area network (WPAN), comprising a plurality of wireless devices, each wireless device being capable of communicating with a base station both directly and through others of the wireless devices.

**17.** The WPAN of claim 16, wherein one of the wireless devices is a WPAN coordinator for coordinating the communications between each wireless device and the base station.

**18.** The WPAN of claim 17, wherein each wireless device comprises:

a receiver for receiving control signals from the WPAN coordinator;
a first transceiver for communicating with the base station; and
a second transceiver for communicating with other ones of the wireless devices.

**19.** The WPAN of claim 17, wherein the WPAN coordinator includes a chip-on-board (COB) radio access technology (RAT) transceiver, a COB RAT baseband processor, and a COB multiple-input-multiple-output (MIMO) coprocessor.

**20.** The WPAN of claim 17, wherein the WPAN coordinator includes a COB remote antenna-link subsystem.

**21.** The WPAN of claim 17, wherein the WPAN coordinator includes a plug-in module remote antenna-link subsystem.

**22.** The WPAN of claim 16, wherein two of the wireless devices communicate with each other wirelessly.

**23.** The WPAN of claim 16, wherein two of the wireless devices communicate with each other through a cable.

**24.** The WPAN of claim 16, wherein two of the wireless devices communicate with each other wirelessly, and two of the wireless devices communicate with each other through a cable.

**25.** The WPAN of claim 16, wherein the base station comprises a cellular base station, a wireless local area network (WLAN) access point, or a wireless metropolitan area network (WMAN) base station.

**26.** The WPAN of claim 16, wherein each wireless device communicates with the base station through a first frequency band and communicates with the others of the wireless devices through a second frequency band, and wherein each wireless device comprises:

> a first converter for converting signals from the first frequency band to the second frequency band, and
> a second converter for converting signals from the second frequency band to the first frequency band,
> wherein the first and second converters each include a controller for controlling signal phase and signal amplitudes, a frequency band shifter, and a balancer for balancing conversion gain.

**27.** A wireless system, comprising
a plurality of base stations;
a plurality of wireless personal area networks (WPANs) each comprising a plurality of wireless devices capable of communicating with one of the base stations; and
a mobile device communicating with the base stations,
wherein, when the mobile device is in an area of one of the WPANs, the mobile device acts as a WPAN coordinator for the one of the WPANs, and the mobile device communicates with the base stations both directly and through the wireless devices of the one of the WPANs.

**28.** The system of claim 27, wherein the base stations include one or more of a cellular base station, a wireless local area network (WLAN) access point, and a wireless metropolitan area network (WMAN) base station.

**29.** The system of claim 27, wherein each of the wireless devices communicates with the UE wirelessly.

**30.** The system of claim 27, wherein each of the wireless devices communicates with the UE through a cable.

**31.** The system of claim 27, wherein the plurality of wireless devices comprise a first wireless device capable of communicating with the UE wirelessly and a second wireless device capable of communicating with the UE through a cable.

**32.** The system of claim 27, wherein each wireless device comprises
a receiver for receiving control signals from the mobile device;
a first transceiver for communicating with the base stations; and
a second transceiver for communicating with the mobile device.

**33.** The system of claim 27, wherein the mobile device includes a chip-on-board (COB) radio access technology (RAT) transceiver, a COB RAT baseband processor, and a COB multiple-input-multiple-output (MIMO) coprocessor.

**34.** The system of claim 27, wherein the mobile device includes a COB remote antenna-link subsystem.

**35.** The system of claim 27, wherein the mobile device includes a plug-in module remote antenna-link subsystem.

**36.** The system of claim 27, wherein each wireless device communicates with the base station through a first frequency band and communicates with the mobile device through a second frequency band, and wherein each wireless device comprises:

> a first converter for converting signals from the first frequency band to the second frequency band, and
> a second converter for converting signals from the second frequency band to the first frequency band,
> wherein the first and second converters each include a controller for controlling signal phase and signal amplitudes, a frequency band shifter, and a balancer for balancing conversion gain.

**37.** User equipment (UE) located in a wireless personal area network (WPAN), the WPAN including a plurality of wireless devices capable of relaying communication between the UE and a base station, the UE comprising
means for directly communicating with the base station; and
means for communicating through the wireless devices with the base station.

**38.** The UE of claim 37, wherein the means for directly communicating comprises at least one antenna.

**39.** The UE of claim 37, wherein the means for directly communicating comprises a first antenna for communicating with the base station when the base station is cellular based, a second antenna for communicating with the base station when the base station is a WLAN (wireless local area network) access point, and a third antenna for communicating with the base station when the base station is a WMAN (wireless metropolitan area network) base station.

**40.** The UE of claim 37, the means for directly communicating comprising:

a cellular-based RAT (radio access technology) transceiver;
a WLAN (wireless local area network) based transceiver; and
a WMAN (wireless metropolitan area network) based transceiver.

**41.** The UE of claim 37, further comprising:

an RAI baseband processor; and
an multiple-input-multiple-output (MIMO) coprocessor.

**42.** The UE of claim 37, further comprising an RA-link (remote antenna link) network transceiver and an antenna for communicating through the wireless devices with the base station.

**43.** The UE of claim 37, the means for communicating through the wireless devices comprising a plug-in module an RA-link (remote antenna link) network transceiver.

**44.** The UE of claim 37, further comprising an antenna both for directly communicating with the base station and for communicating through the wireless devices with the base station.

**45.** The UE of claim 37, wherein the means for communicating through the wireless devices comprises a means for communicating with the wireless devices wirelessly.

**46.** The UE of claim 37, wherein the means for communicating through the wireless devices comprises a means for communicating with the wireless devices through a cable.

**47.** The UE of claim 37, wherein the means for communicating through the wireless devices comprises a first means for communicating with the wireless devices wirelessly and a second means for communicating with the wireless devices through a cable.

**48.** A wireless device within a wireless personal area network (WPAN), the WPAN including a WPAN coordinator, wherein the wireless device is capable of relaying communication between one other wireless device located in the WPAN and a base station, the wireless device comprising:

a first means for communicating with the base station through a first frequency band; and
a second means for communicating with the other wireless device through a second frequency band.

**49.** The wireless device of claim 48,
wherein the first means comprises a first converter for converting signals from the first frequency band to the second frequency band,
wherein the second means comprises a second converter for converting signals from the second frequency band to the first frequency band, and
wherein the first and second converters each include a frequency band shifter and a balancer for balancing conversion gain.

**50.** The wireless device of claim 48, further comprising a receiver for receiving control signals from the WPAN coordinator.

**51.** The wireless device of claim 48, wherein the first means comprises an antenna.

**52.** The wireless device of claim 48, wherein the first means comprises a first antenna for communicating with the base station when the base station is cellular based, a second antenna for communicating with the base station when the base station is a WLAN (wireless local area network) access point, and a third antenna for communicating with the base station when the base station is a WMAN (wireless metropolitan area network) base station.

**53.** The wireless device of claim 48, further comprising an antenna both for directly communicating with the base station and for communicating through the other wireless device with the base station.

**54.** The wireless device of claim 48, wherein the second means comprises an antenna for communicating with the other wireless device wirelessly.

**55.** The wireless device of claim 48, wherein the second means comprises a means for communicating with the other wireless device through a cable.

Fig. 1
PRIOR ART

Fig. 2

Fig. 3

EP 1 705 843 A1

Fig. 4

Fig. 5

**EP 1 705 843 A1**

European Patent
Office

**EUROPEAN SEARCH REPORT**

Application Number

EP 05 25 7316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/131025 A1 (DOHLER MISCHA ET AL) 8 July 2004 (2004-07-08) * abstract * * paragraphs [0005], [0006], [0016], [0020] - [0027], [0051], [0080] - [0087], [0089], [0090], [0098] - [0100], [0114] - [0123], [0134] - [0140]; figures 10,12,13,16 * * paragraphs [0171] - [0177], [0179] - [0182], [0188] * ----- | 1-55 | INV. H04L12/56 H04B7/06 H04B7/26 ADD. H04Q7/30 H04L12/28 |
| D,X | LANEMAN, J.N., TSE, D.N.C, WORNELL, G.W.: "Cooperative Diversity in Wireless Networks: Efficient Protocols and Outage Behaviour" IEEE, [Online] December 2004 (2004-12), pages 3062-3080, XP002389089 Retrieved from the Internet: URL:http://ieeexplore.ieee.org/iel5/18/298 65/01362898.pdf?tp=&arnumber=1362898&isnum ber=29865> [retrieved on 2006-07-06] | 1-3, 7-15, 37-47 | |
| A | * page 3062, right-hand column - page 3068, left-hand column * ----- -/-- | 4-6, 16-36, 48-55 | TECHNICAL FIELDS SEARCHED (IPC) H04L H04B H04Q |

The present search report has been drawn up for all claims

| Place of search | Date of completion of the search | Examiner |
|---|---|---|
| Berlin | 6 July 2006 | Englund, T |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

16

**European Patent Office**

**EUROPEAN SEARCH REPORT**

Application Number

EP 05 25 7316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 100 27 115 A1 (SIEMENS AG) 13 December 2001 (2001-12-13) | 1-3,7,8, 13, 16-18, 22,25, 37,38, 42,44,45 | |
| A | * abstract * | 4-6, 9-12,14, 15, 19-21, 23,24, 26-36, 39-41, 43,46-55 | |
| | * paragraphs [0004] - [0011] * ----- | | |
| | | | **TECHNICAL FIELDS SEARCHED (IPC)** |

The present search report has been drawn up for all claims

| Place of search | Date of completion of the search | Examiner |
|---|---|---|
| Berlin | 6 July 2006 | Englund, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 705 843 A1

## ANNEX TO THE EUROPEAN SEARCH REPORT
## ON EUROPEAN PATENT APPLICATION NO.

EP 05 25 7316

06-07-2006

| Patent document cited in search report | | Publication date | Patent family member(s) | | Publication date |
|---|---|---|---|---|---|
| US 2004131025 | A1 | 08-07-2004 | EP | 1400062 A2 | 24-03-2004 |
| | | | WO | 03003672 A2 | 09-01-2003 |
| DE 10027115 | A1 | 13-12-2001 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 66459405 P

**Non-patent literature cited in the description**

- **TSE et al.** Cooperative Diversity in Wireless Networks: Efficient Protocols and Outage Behavior. *IEEE Transactions on Information Theory,* December 2004, vol. 50 (12